Europäisches Patentamt

European Patent Office

Office européen des brevets

(19)

(11) Publication number: **0 074 953**
**B1**

(12) # EUROPEAN PATENT SPECIFICATION

(45) Date of publication of patent specification: **23.04.86**

(51) Int. Cl.⁴: **B 62 D 25/18**

(21) Application number: **82900025.6**

(22) Date of filing: **01.12.81**

(86) International application number:
**PCT/FI81/00088**

(87) International publication number:
**WO 82/01857 10.06.82 Gazette 82/15**

(54) **VEHICLE MUDFLAP.**

(30) Priority: **01.12.80 FI 803719**

(43) Date of publication of application:
**30.03.83 Bulletin 83/13**

(45) Publication of the grant of the patent:
**23.04.86 Bulletin 86/17**

(84) Designated Contracting States:
**AT CH DE FR GB LI NL SE**

(56) References cited:
**DE-A-1 480 377**
**DE-A-2 045 212**
**DE-C- 264 208**
**DE-C- 534 262**
**FR-A- 725 061**
**FR-A-2 294 902**
**SE-C- 32 519**
**US-A-1 899 937**
**US-A-2 605 119**

(73) Proprietor: **TURUNEN, Pekka Juhani**
**Sähköttäjänkatu 2 F 71**
**SF-00520 Helsinki 52 (FI)**

(72) Inventor: **TURUNEN, Pekka Juhani**
**Sähköttäjänkatu 2 F 71**
**SF-00520 Helsinki 52 (FI)**

(74) Representative: **Habersack, Hans-Jürgen et al**
**Patentanwälte Zipse & Habersack**
**Kemnatenstrasse 49**
**D-8000 München 19 (DE)**

Courier Press, Leamington Spa, England.

## Description

The present invention relates to a vehicle mudflap according to the preamble of claim 1 which mudflap is attached behind the tyre, with respect to the driving direction, to the frame structure or equivalent of the vehicle.

Mudflaps are designed for preventing pebbles and other loose material, hurled off the road surface by the vehicle tyres, from flinging around, so that no annoyance, harm or damage is caused for other passengers of the road. The use of mudflaps in vehicles improves road safety.

The currently used mudflaps have a uniform and stiff structure. Such mudflaps cause harmful air flows and whirls, which send fine dust or fog from the road surface onto the windscreens of other vehicles moving on the road. The pebbles flung from the tyres towards the mudflaps do not lose enough of their dynamic energy, but continue their motion after bouncing off the mudflaps and consequently cause a danger for other vehicles.

Stiff mudflaps increase the body draft of the vehicle, and thus also increase fuel consumption. Moreover, the average service life of mudflaps is comparatively short.

A mudflap known from DE—A—20 45 212 and corresponding to the precharacterising part of claim 1 is composed of a plurality of separate ribbon-like or lamellated members the surface of which being inclined with respect to the driving direction in order to diminish the velocity of water droplets, pebbles etc. striking against the mudflap. The members are arranged either in parallel or wedge-like.

The object of the present invention is, among other things, to eliminate the aforementioned drawbacks and to realize a mudflap which has a simple structure and low manufacturing costs. This is achieved by means of the characteristic features of the invention enlisted mainly in the Patent Claim 1.

Among the advantages of the present invention, the following can be pointed out. The members of the mudflap are made of an elastic and flexible material. They are arranged to bend in the driving draft in such a fashion that every second flap member is bent more than the rest. Thus there are formed vertical gaps in the mudflap and the air drag is considerably reduced.

Such separate flap members yield effectively when hit by a pebble hurled from the tyre so that the pebble immediately loses speed and falls on the road. During winter time the formation of icy lumps in the mudflaps is prevented explicitly owing to their flexible fibrous and/or lamellated structure. Thus the strain directed towards the mudflaps is also diminished and their wear resistance is increased.

In the following the present invention is described in detail with reference to the appended drawings.

Figure 1 is an illustration of a preferred embodiment of the present invention seen from the back of the vehicle.

Figure 2 is an illustration of the mudflap of Figure 1, seen from the side, when driving draft is not effective.

Figure 3 is an illustration of the mudflap of Figure 1, seen from the side, when driving draft is effective.

Figure 4 is an illustration of another preferred embodiment of the mudflap of the invention.

Figures 5 and 6 show details of a third embodiment of the mudflap of the invention.

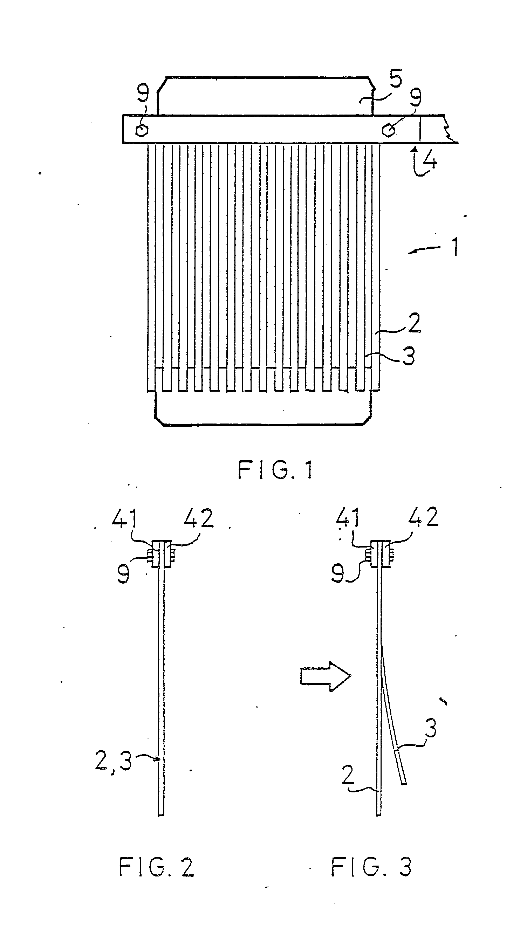

In the preferred embodiment of the mudflap according to Figures 1 and 2, the mudflap 1 is formed of straight, fibrous flap members 2, 3, which are attached adjacently in a row to a suitable supporting member 4. The said supporting member can further be attached by means of conventional methods behind the tyre 5, seen from the driving direction, to the frame structure or equivalent of the vehicle, which is not illustrated in the drawing. The fibrous flap members of the mudflap are in turns long 2 and short 3. The difference in length in comparison with the total length of the mudflap is not great, preferably about 5—15%, which depends on the material to be used. Profitably the flap members 2, 3 are manufactured of a flexible and facile, water-repellent artificial fiber material, which should be particularly resistant to corrosion.

When a vehicle provided with the aforementioned mudflaps moves forward, the air flow separates the shorter and lighter flap members 3 from the longer and heavier flap members 2, as is seen in Figure 3. Thus there are formed vertical air gaps in the mudflap.

In the previous embodiment, the fibrous flap members can also be suitably divided into alternating groups of short and long flap members.

The air gaps in the mudflap of the invention can also be created so that at the lower end of every second flap member or group of flap members there is attached a suitable leaden weight or equivalent, in which case the lighter flap members move more easily in accordance to the air flow.

In the embodiment of Figures 1—3 the fibrous flap members of the mudflap fall directly downwards from the supporting member. They can also be arranged to fall downwards in a fan-shaped fashion, in which case the air gaps are arranged without any further measures between the flap members 2, 3 of equal length.

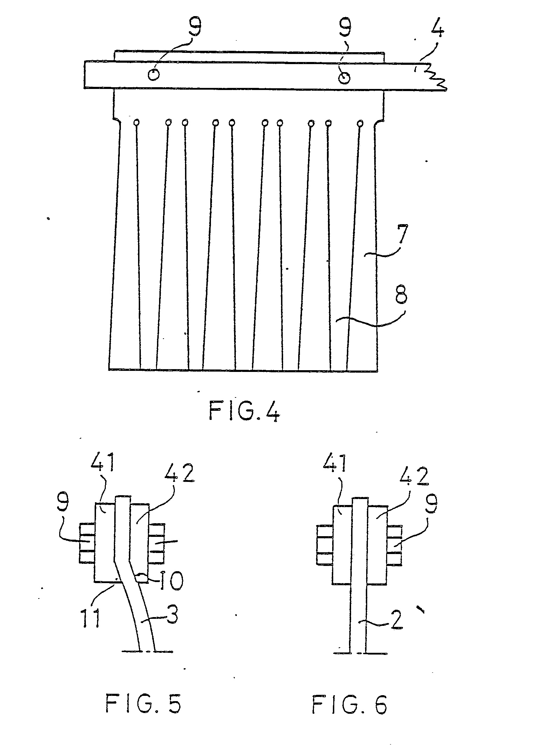

In Figure 4 is presented another mudflap according to the invention, which consists of adjacent ribbon-like or lamellated flap members 7, 8. Every second flap member 7 becomes wider when moving downwards from the supporting member 4 or its immediate neighbourhood, and respectively the remaining flap members 8 become narrower. Owing to the effect of driving draft, the flap members 7 which are wide at the bottom are bent backwards and thus separated — due to greater air resistance — from the flap members 8 which are narrow at the bottom. Now the desired vertical or roughly vertical air gaps are formed in the mudflap.

The mudflap of Figure 4 can also be realized so that the ribbon-like or lamellated flap members are partly arranged in overlapping or roughly adjacent fashion. In this case the first alternating flap members 8, located partly at the front, could be of equal width, whereas the second alternating flap members 7, located partly at the back, could still become wider towards the bottom.

The mudflap is attached in a conventional fashion to a suitable supporting member, and by means of the said member further behind the tyre or directly to the body of the car. In Figures 5 and 6 are illustrated details of a mudflap of the invention, where a certain type of supporting member is utilized.

The fibrous, ribbon-like or lamellated flap members of the mudflap can be pressed in between the supporting pieces 41, 42 by means of bolted joints 9 or similar joints. In the supporting pieces there are respectively arranged grooves 10 and brackets 11 to match those alternating flap members or groups of flap members, which are directed slightly backwards from the plane of the mudflap (Figure 6) in order to create or reinforce the air gaps. Figure 5 represents a side-elevation view of a similar point as described above, and Figure 6 represents a respective view for example at the next flap member of the mudflap where the said grooves and brackets do not exist and where the said flap member of the mudflap falls directly downwards when in the resting position.

The mudflap of the invention can be manufactured of any flexible and durable material, such as rubber or a suitable type of plastic. The whole of the mudflap can be made of one piece of material by suitably cutting the fibrous, ribbon-like or lamellated flap members therefrom and by leaving the upper part unbroken as is seen in Figure 4. On the other hand, the said flap members can also be manufactured separately, and what is more, of different materials. They can be arranged for instance so that every second flap member is made of a more flexible material than the rest.

**Claims**

1. A vehicle mudflap, attached behind the tyre with respect to the driving direction, to the frame structure or equivalent of the vehicle, the said mudflap at least partly comprising vertical or roughly vertical fibrous (2, 3) and/or ribbon-like or lamellated (7, 8) members, the said members being located in a row adjacently or roughly adjacently, characterized in that every second member (3, 7) of the mudflap or group of members thereof is arranged to bend in the driving draft so that vertical gaps are formed in between the separate members (2, 3; 7, 8) or groups of members.

2. The mudflap of Claim 1, characterized in that the members or groups of members thereof are alternatingly long (2) and short (3).

3. The mudflap of Claim 1, characterized in that at the bottom edge of every second member or group of members there is attached a weight.

4. The mudflap of Claim 1, 2 or 3, characterized in that its members are arranged to fall downwards from their attaching point in a fan-shaped fashion.

5. The mudflap of Claim 1, 2 or 3, characterized in that every second member or group of members has a straight or downwards narrowing shape (8) and the rest of the members (7) have a downwards widening shape.

6. The mudflap of Claim 1, 2 or 3, characterized in that its members (2, 3) are fixed between the supporting pieces (41, 42), which supporting pieces are provided with respective grooves (10) and brackets (11) to match those alternating members or groups of members which are directed to bend slightly backwards from the mudflap plane.

7. The mudflap of Claim 5, characterized in that the members (2, 3; 7, 8) are made of a flexible material such as rubber or a suitable type of plastic.

8. The mudflap of Claim 7, characterized in that it is made of a uniform piece of material (Figure 4).

9. The mudflap of Claim 7, characterized in that every second member or group of members is made of a more flexible material than the rest.

**Revendications**

1. Bavette pour véhicule qui est fixée au chassis ou équivalent du véhicule derrière la roue relatif à la direction de course, cette bavette présentant au moins partiellement des membres fibreux (2, 3) et/ou en forme de ruban ou lammellés (7, 8), ces membres étant arrangés dans une rangée côté à côté ou environ côté à côté, caractérisée en ce que chaque deuxième membre (3, 7) de la bavette ou groupe de cettes bavettes est arrangé pour se plier au vent relatif en ce que se forment des brèches verticales entre les membres (2, 3; 7, 8) ou groupes de membres particuliers.

2. La bavette selon la revendication 1, caractérisée en ce que ces membres ou groupes de cettes membres sont alternativement longs (2) et courts (3).

3. La bavette selon la revendication 1, caractérisée en ce qu'on a fixé un poids au bord inférieur de chaque deuxième membre.

4. La bavette selon la revendication 1, 2 ou 3, caractérisée en ce que ses membres sont arrangés de pendre bas de ses points de fixation en forme éventail.

5. La bavette selon la revendication 1, 2 ou 3, caractérisée en ce que chaque deuxième membre ou groupe de membres présente une forme droite ou une forme se diminuant vers le bas (8) et que le reste des membres présénte une forme s'élargissante vers le bas (7).

6. La bavette selon la revendication 1, 2, ou 3, caractérisée en ce que ses membres (2, 3) sont fixés entre des supports (41, 42) qui présentent des gorges (10) et des appuis (11) pour s'adapter à ces membres alternatifs ou groupes de membres qui sont arrangés de se plier légèrement en arrière de la bavette.

7. La bavette selon la revendication 5, caractérisée en ce que les membres (2, 3; 7, 8) sont fabriqués d'une matière flexible comme de la caoutchouc ou d'une matière plastique convenable.

8. La bavette selon la revendication 7, caractérisée en ce qu'elle est fabriquée d'une pièce de matière uniforme (figure 4).

9. La bavette selon la revendication 7, caractérisée en ce que chaque deuxième membre ou groupe de membres est fabriqué dune matière plus flexible que le reste.


**Patentansprüche**

1. Schmutzfänger für Fahrzeuge, der in bezug auf die Fahrtrichtung hinter dem Reifen an der Rahmenkonstruktion oder einem gleichwertigen Teil des Fahrzeugs befestigt ist und mindestens teilweise vertikale oder etwa

vertikale faserige (2, 3) und/oder bandförmige oder lamellenartige (7, 8) Glieder aufweist, die in einer Reihe einander benachbart oder etwa einander benachbart angeordnet sind,

dadurch gekennzeichnet, daß jedes zweite Glied (3, 7) des Schmutzfängers oder jede zweite Gliedergruppe desselben so angeordnet ist, daß es/sie sich in dem Fahrtzug biegt, so daß vertikale Spalte zwischen den getrennten Gliedern (2, 3; 7, 8) oder Gliedergruppen gebildet werden.

2. Schmutzfänger nach Anspruch 1, dadurch gekennzeichnet, daß die Glieder oder Gliedergruppen desselben abwechselnd lang (2) und kurz (3) sind.

3. Schmutzfänger nach Anspruch 1, dadurch gekennzeichnet, daß an der Unterkante jedes zweiten Gliedes oder Gliedergruppe ein Gewicht befestigt ist.

4. Schmutzfänger nach Anspruch 1, 2 oder 3, dadurch gekennzeichnet, daß seine Glieder so angeordnet sind, daß sie von ihrem Befestigungspunkt in fächerförmiger Art herabfallen.

5. Schmutzfänger nach Anspruch 1, 2 oder 3, dadurch gekennzeichnet, daß jedes zweite Glied oder Gliedergruppe eine gerade oder nach unten schmaler werdende Gestalt (8) und der Rest der Glieder (7) eine nach unten breiter werdende Gestalt hat.

6. Schmutzfänger nach Anspruch 1, 2 oder 3, dadurch gekennzeichnet, daß seine Glieder (2, 3) zwischen den Stützteilen (41, 42) befestigt sind, die mit entsprechenden Nuten (10) und Kraghaltern (11) entsprechend den abwechselnden Gliedern oder Gliedergruppen versehen sind, welche so ausgerichtet sind, daß sie sich von der Ebene des Schmutzfängers geringfügig nach hinten biegen.

7. Schmutzfänger nach Anspruch 5, dadurch gekennzeichnet, daß die Glieder (2, 3; 7, 8) aus einem flexiblen Werkstoff, beispielsweise Gummi oder einer geeigneten Art von Kunststoff hergestellt sind.

8. Schmutzfänger nach Anspruch 7, dadurch gekennzeichnet, daß er aus einem einteiligen Stück Material hergestellt ist (Fig. 4).

9. Schmutzfänger nach Anspruch 7, dadurch gekennzeichnet, daß jedes zweite Glied oder Gliedergruppe aus flexiblerem Werkstoff hergestellt ist als der Rest.

FIG. 1

FIG. 2

FIG. 3

FIG. 4

FIG. 5

FIG. 6